(19) **Europäisches Patentamt / European Patent Office / Office européen des brevets**

(11) **EP 3 976 336 B1**

(12) # EUROPEAN PATENT SPECIFICATION

(45) Date of publication and mention
of the grant of the patent:
**28.01.2026   Bulletin 2026/05**

(21) Application number: **20731537.5**

(22) Date of filing: **22.05.2020**

(51) International Patent Classification (IPC):
**B29B 13/02** (2006.01)    **B29C 48/09** (2019.01)
**B29C 48/32** (2019.01)    **B29C 48/90** (2019.01)
**B29C 48/92** (2019.01)    **B29C 71/02** (2006.01)
**C08J 7/00** (2006.01)    **C08K 3/04** (2006.01)
**C08L 71/12** (2006.01)    **B29C 48/14** (2019.01)
**B29C 48/885** (2019.01)    **C08G 65/40** (2006.01)
**B29K 71/00** (2006.01)    **B29K 81/00** (2006.01)
**B29L 23/00** (2006.01)

(52) Cooperative Patent Classification (CPC):
(C-Sets available)
**B29B 13/024; B29B 13/02; B29C 48/09;
B29C 48/32; B29C 48/903; B29C 48/92;
B29C 71/02; C08J 7/08; C08L 71/123;**
B29B 2013/005; B29C 48/1474; B29C 48/885;
B29C 48/904; B29C 48/912; B29C 2791/006;
(Cont.)

(86) International application number:
**PCT/GB2020/051255**

(87) International publication number:
**WO 2020/240161 (03.12.2020 Gazette 2020/49)**

(54) **PIPE MANUFACTURE**

ROHRHERSTELLUNG

FABRICATION DE TUYAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.05.2019   EP 19177737**

(43) Date of publication of application:
**06.04.2022   Bulletin 2022/14**

(73) Proprietor: **Victrex Manufacturing Limited
Tornton
Cleveleys
Lancashire FY5 4QD (GB)**

(72) Inventors:
• **SIMPSON, Gayle
Lancashire FY5 4QD (GB)**

• **MULLINEAUX, Nicholas
Lancashire FY5 4QD (GB)**

(74) Representative: **Gurun, Lara et al
Victrex Manufacturing Limited
Intellectual Property Department
Victrex Technology Centre
Hillhouse International
Thornton Cleveleys FY5 4QD (GB)**

(56) References cited:
WO-A1-2010/088639    WO-A1-2011/117607
WO-A1-2012/047613    WO-A1-2012/107753
WO-A1-2018/055384    WO-A2-02/096974
CN-A- 104 441 536    CN-A- 106 273 303
CN-A- 106 273 352    CN-A- 106 674 541
CN-A- 108 859 064    JP-A- H0 259 330
US-A1- 2006 094 852

(52) Cooperative Patent Classification (CPC): (Cont.)
B29C 2948/92704; B29C 2948/92923;
B29K 2071/00; B29K 2081/04; B29K 2081/06;
B29L 2023/22; C08G 65/4012; C08J 2371/08

C-Sets
**C08K 3/04, C08L 71/123**

**Description**

The invention relates to an improved process for making long pipes (e.g. >300m) from certain types of thermoplastic polymer (e.g. a polyaryletherketone polymer) via a single extrusion process without a certain type of defect occurring on the wall of the pipe during manufacture. The improved process involves a pre-conditioning step for the polymer feedstock.

Pipes formed from certain thermoplastic polymers - for example a polyaryletherketone (PAEK) polymer such as polyetheretherketone (PEEK) may be of value in a range of industries, including in the oil, gas and aerospace sectors. In such sectors it can be especially useful to have an extremely long length of pipe that is formed from a single extrusion process rather than being made from many smaller pipes connected by some form of joint.

Until very recently the inventors suggest it has been very difficult to extrude very long lengths of pipes from PAEK or similar polymers, because unacceptable defects tend to start to occur after a certain length of pipe has been extruded. In general, in the broader technical field of thermoplastic pipe extrusions, pipe defects can sometimes occur because of die drool. But with the extrusion of very long pipes made from PAEK and similar polymers, the present inventors believe that many of the troublesome pipe defects they encountered are not attributable to die drool issues and other types of problem and defect are involved.

After extensive studies, the present inventors have now established a significant improvement in the method for reliably manufacturing the above-mentioned long pipes without certain types of defect. The improvement has come about through the discovery of a surprisingly effective pre-conditioning step for the polymer feedstock before it is then used in the pipe extrusion process. The present inventors contend that the process of the present invention allows the more reliable formation of very long extruded pipes, using pre-conditioned PAEK-type polymers, without unacceptable defects occurring so readily in the pipe wall during the manufacturing process.

It is well-established in the prior art that PAEK-type polymer feedstocks should go through a drying step prior to use in an extrusion process, as explained in more detail below. The conditioning conditions of the present disclosure are different to the simple drying conditions of the prior art, and they seem to achieve more in terms of polymer performance in long pipe extrusion than the known benefit (explained below) that is simply attributable to polymer drying.

The Victrex group of companies has published an "Extrusion Molding Processing Guide" dated March 2016 where on page 2 it mentions: "DRYING: Although Victrex materials are supplied nominally dry, pellets may absorb up to 0.5% atmospheric moisture. It is essential to dry the pellets to moisture content below 0.02% prior to processing, since traces of moisture create high vapour pressure at PAEK processing temperatures, resulting in foamy extrudate. Pellets may be dried in an air circulating oven for 3 hours at 150°C or overnight at 120°C. For larger quantities such as during serial production, desiccant dryers with a dew point of -40°C may be preferential."

The Solvay group of companies have published a "KetaSpire™ PEEK - Design and Processing Guide" - dated 2016, where on page 99 it mentions: "Dryer. KetaSpire resins must be dried before extrusion. Because extrusion is a low-pressure forming process, a moisture content of less than 200ppm (0.02%) is required. A desiccated dryer capable of maintaining a temperature of 150°C (302°F) at a dew point of -40°C (-40°F) is necessary to achieve the required moisture content. Either a desiccated hopper dryer or a desiccated oven may be used."

The Evonik group of companies has published their "Vestakeep™ PEEK Processing Guidelines" which suggests pre-drying PEEK at 170°C for 8-12 hours prior to use in extrusion applications.

The patent literature also seems focused on the idea of pre-drying PAEK/PEEK polymers prior to use in pipe extrusions. JPH0788033 discloses the drying PEEK resin particles to a water content of 0.1% or less before use in a pipe extrusion process, for example, in an air circulating drying furnace to 150°C for 3 hours or more until achieving a water content of 0.1% or less. CN104441536 discloses the drying of PEEK particles at 150°C-160°C for 4-5 hours before use in a pipe extrusion process. CN108859064 discloses the drying of PEEK particles in an oven at 160°C for 8 hours prior to extrusion into tubes.

CN106273303 A discloses a preparation method and device for PPESK pipes. The process includes the steps of drying, feeding, extrusion plasticizing, homogenization flow distribution, forming/shaping, traction, cutting and heat treatment. The pipes are compact in structure and smooth in appearance when discharged out of a bush die.

WO2012/047613 A1 relates to heat treatment of polymorphic semicrystalline or crystallizable polymers to increase the content of the highest melting crystalline form.

CN106674541 B relates to a preparation method of poly(ether-ketone-ketone) powder for electrostatic spraying based on thermal oxygen treatment.

WO2010/088639 A1 discloses a flexible composite pipe useful in off-shore oil and gas well operations which contains at least one polymer layer such as an internal pressure sheath, an intermediate sheath, an anti-wear layer and/or an outer sheath, wherein the polymer layer is formed using a polyetherketoneketone or mixture of polyetherketoneketones having a controlled ratio of different isomeric repeating units.

WO2012/107753 A1 describes a process and apparatus for producing a PEEK pipe having a length greater than 250 metres. The pipe-making process of the present invention could use a calibrator device similar to that described in WO2012/107753 A1. Previous research of the present inventors (currently unpublished) has not used the pre-conditioned polymer of the present disclosure.

WO02096974 A2 discloses a method of high-pressure and high-temperature water treatment of PEEK polymer in order to provide a polymer containing reduced levels of inorganic ions. There is also a suggestion that the process may be capable of reducing the level of residual solvent in the polymeric material, for example where the solvent is diphenylsulfone.

The present invention is defined by a process for making a pipe according to claim 1.

The type of pipe-wall defects solved by the pre-conditioned polymer feedstock of the present disclosure have tended to be visible to the naked eye on the wall of the pipe. They can often start to happen above around 300m into a pipe extrusion process and occur sporadically thereafter. This particular type of defect (a "Defect") may not necessarily mean that the pipe wall goes outside of a desired specification regarding its wall thickness or outside diameter, but nevertheless, the presence of the Defect may cause concern about the integrity of the pipe, potentially causing it to be deemed unacceptable for use in certain technology applications where extremely high quality is demanded for good reasons. Such Defect may appear on the outside of the pipe with a white coloured substance which can be rubbed or scraped off, and in that zone the outside surface of the pipe may be depressed very slightly in some cases vs the overall outer profile of the pipe. On the inner surface of the pipe, the same Defect will often appear as a zone of very slight narrowing of the bore of the pipe - which can be visible by the way that light is reflected when looking through a short segment of pipe where such a Defect is present.

As explained in more detail in the experimental section hereinafter, the present inventors started a pipe extrusion process using a PAEK-type polymer that had simply been dried according to a prior art drying protocol and the extruded pipe showed a Defect after a period of time. Then the extrusion was seamlessly continued using PAEK-type polymer from the same batch, except that it had undergone the pre-conditioning process of the present disclosure. This delivered a pipe with an overall length of 4120m without any further Defects occurring.

Other long pipe extrusions have then been carried out using more of the conditioned PAEK-type polymer. These have demonstrated that the Defect-avoiding effect of using conditioned polymer feedstock is reproducible.

When trying to understand the underlying reason for the beneficial effects of the conditioned PAEK-type polymeric composition, the present inventors now believe that the extended high temperature conditions of the present conditioning process may be resulting in a loss of trace amounts of material other than water from the polymer composition. Inspection of the filter and inside walls of the drying equipment revealed that small amounts of material were being caught/deposited as a solid. The solubility properties of this material demonstrated that it was not simply PAEK polymer dust being caught.

The inventors believe that trace amounts of organic and inorganic chemicals are present in all PAEK-type polymer feedstocks irrespective of which polymer company manufactured them. The inventors can now speculate that the conditioning process of the present disclosure somehow reduces the levels of one or more organic manufacturing impurities in the PAEK-type polymer composition, perhaps by evaporation, or heat-induced decomposition, or by some combination of both effects.

The process appears to reduce the levels of manufacturing impurities in the PAEK-type polymer composition. This reduction of organic manufacturing impurities in PAEK-type polymer feedstocks seems to be the key to avoiding the above-mentioned type of Defect during long pipe extrusions.

According to the first aspect, which is not claimed, there is provided a conditioning process for a polymer composition, wherein said polymer composition comprises one or more polymeric materials each comprising: polyetheretherketone, polyetherketone, polyetherketoneetherketoneketone or polyetherdiphenyletherketone

and wherein the polymer composition contains organic manufacturing impurities;

wherein the conditioning process comprises contacting said polymer composition with a flowing hot gas for a conditioning period, according to the conditions described in (a) or (b) below in order to reduce the organic manufacturing impurities in the polymer composition:

(a) wherein the temperature T (°C) of the hot gas is a temperature selected in the range from 130°C to 230°C, and wherein the conditioning period comprises one or more periods of time totalling at least t hours, wherein t is related to T according to the formula:

$$t = X exp(-0.048T)$$

wherein X is 58000; and where in any case, t is at least 1.5 hours;

(b) or wherein two or more temperatures T (°C) are selected as the temperatures of the hot gas to be used at different times during the conditioning process, wherein each value of T is selected in the range from 130°C to 230°C, and wherein the conditioning period comprises one or more periods of time at each of the two or more selected temperatures, wherein said one or more periods of time at each of the two or more selected temperatures are each selected so as to achieve at least the same reduction in organic manufacturing impurities as can be achieved by the single-temperature conditioning process described in (a) above.

The skilled person will appreciate that such a conditioning process need not be done at one single temperature according to paragraph (a) above, and that the same conditioning effect could be achieved using two or more different temperatures for appropriate amounts of time. Having disclosed the conditions suitable for the process according to paragraph (a) above, the skilled person should be able to identify alternative sets of conditioning temperatures and times as described in paragraph (b) above, without undue experimentation.

In one embodiment there is provided a conditioning process for a polymer composition, wherein said polymer composition comprises one or more polymeric materials each comprising: polyetheretherketone, polyetherketone, polyetherketoneetherketoneketone or polyetherdiphenyletherketone

and wherein the polymer composition contains organic manufacturing impurities;
wherein the conditioning process comprises contacting said polymer composition with a flowing hot gas for a conditioning period, wherein the temperature T (°C) of the hot gas is a temperature selected in the range from 130°C to 230°C, and wherein the conditioning period comprises one or more periods of time totalling at least t hours, wherein t is related to T according to the formula:

$$t = X exp(-0.048T)$$

wherein X is 58000; and where in any case, t is at least 1.5 hours;

Further aspects, details and embodiments of the invention are described below.

In one embodiment the polymer composition used in the conditioning process is a granule, pellet or powder composition. In one embodiment it is a granule composition.

In further embodiments X is 58000. In further embodiments X is 65000. In further embodiments X is 70000. In further embodiments X is 75000. In further embodiments X is 80000. In further embodiments X is 90000. In further embodiments X is 100000. In further embodiments X is 110000. With each of the aforementioned embodiments (and with any other aspect(s) or other embodiment(s) herein) the value of t may be at least 1.5 hours, or at least 2 hours, or at least 2.5 hours, or at least 3 hours.

In a second aspect, which is not claimed, there is provided a polymer composition formed by the polymer conditioning process of the first aspect.

Accordingly, in one embodiment there is provided a conditioned polymer composition formed by a polymer conditioning process for a polymer composition, wherein said polymer composition comprises one or more polymeric materials each comprising: polyetheretherketone, polyetherketone, polyetherketoneetherketoneketone or polyetherdiphenyletherketone

and wherein the polymer composition contains organic manufacturing impurities;
wherein the conditioning process comprises contacting said polymer composition with a flowing hot gas for a conditioning period, according to the conditions described in (a) or (b) below in order to reduce the organic manufacturing impurities in the polymer composition:

(a) wherein the temperature T (°C) of the hot gas is a temperature selected in the range from 130°C to 230°C, and wherein the conditioning period comprises one or more periods of time totalling at least t hours, wherein t is related to T according to the formula:

$$t = X exp(-0.048T)$$

wherein X is 58000; and where in any case, t is at least 1.5 hours;
(b) or wherein two or more temperatures T (°C) are selected as the temperatures of the hot gas to be used at different times during the conditioning process, wherein each value of T is selected in the range from 130°C to 230°C, and wherein the conditioning period comprises one or more periods of time at each of the two or more selected temperatures, wherein said one or more periods of time at each of the two or more selected temperatures are each selected so as to achieve at least the same reduction in organic manufacturing impurities as can be achieved by the single-temperature conditioning process described in (a) above.

The reduction of organic manufacturing impurities achieved during the conditioning process may be measurable using gas chromatography for example, by comparing a sample of the polymer composition from before the start of the conditioning process with one or more samples of the polymer composition taken during the conditioning process, and/or by comparing to standards of known composition.

In this specification the term "organic manufacturing impurities" refers to the collection of the non-polymeric organic compounds that are present within a PAEK-type polymer composition as a result of the various process(es) used to manufacture it. The skilled person understands that organic compounds are compounds that generally contain C-H and C-C bonds.

In this specification, the term "PAEK-type polymer composition" has been used as a convenient shorthand to refer to a composition comprising one or more polymeric materials each comprising (a) phenylene moieties, (b) ether and/or thioether moieties, and optionally (c) ketone and/or sulfone moieties. More particularly it may refer to a composition containing a PAEK polymer. Even more particularly it may refer to a composition containing PEEK polymer.

The combinations of temperature and time required to achieve the beneficial conditioning process are clearly different from the combinations of temperature and time disclosed in the prior art, which are simply aimed at drying a PAEK-type polymer composition.

Conveniently the gas used in the conditioning process may be air. Given that the advice of the prior art is to ensure PAEK-type polymers are suitably dried before use, the skilled person will recognise that a suitable gas for use in the conditioning process is preferably not steam. In order to avoid unwanted chemical degradation of the polymer the gas in the conditioning process is preferably not a gas that is more reactive than air.

In one embodiment the gas is air or one or more inert gases, or any mixture thereof. An example of an inert gas is nitrogen gas. In one embodiment the gas is air or nitrogen or a mixture thereof. In one embodiment the gas is air.

Suitable flow rates for the flowing gas of the conditioning process are, for example, the flow rates normally provided by industrially-available air-drying machines. The skilled person will understand that an increased flow rate will likely speed up the evaporation and removal of organic manufacturing impurities (and/or removal of heat degradation products of organic manufacturing impurities). However, even a slow flow of hot gas may be sufficient to transport evaporated materials away from the mass of polymer that is being conditioned.

The conditioned polymer of the present invention may be used directly in another process, for example an extrusion process to form long, defect-free pipes, or else it may be stored and used later in such a process. If the conditioned polymer is stored for later use, care should be used to avoid the conditioned polymer re-absorbing moisture from the air. Alternatively, such conditioned polymer should be re-treated to remove any re-absorbed moisture prior to its future use in an extrusion or injection moulding application.

In one embodiment the conditioned polymer composition is a batch of at least 1 kilogram of the conditioned polymer composition. In another embodiment it is a batch of at least 5 kilograms. In another embodiment it is a batch of at least 10 kilograms. In a further embodiment it is a batch of at least 50 kilograms. In a further embodiment it is a batch of at least 100 kilograms. In further embodiments the second aspect the polymer composition is in the form of granules or pellets. In one embodiment the polymer composition is in the form of granules.

In further embodiments the polymer composition of any aspect, embodiment comprises particles where the average longest dimension of said particles is less than 5mm. In further embodiments it is less than 4mm, in further embodiments it is less than 3mm. In further embodiments it is less than 2mm.

One important aspect involves the conditioned polymer enabling the formation of very long extruded pipes without defects occurring on the pipe wall.

Accordingly, in one aspect, which is not claimed, there is provided a pipe formed from the conditioned polymer as described herein according to any embodiments, aspects or any combinations thereof. In one embodiment the pipe is a pipe without visible Defects. In one embodiment the pipe has a length of at least 500m without visible Defects. In one embodiment the pipe has a length of at least 800m without visible Defects. In one embodiment the pipe has a length of at least 1000m without visible Defects. In one embodiment the pipe has a length of at least 1.5km without visible Defects. Examples of the visible pipe Defects seen by the inventors during their research efforts are shown in the accompanying Figures.

In one embodiment a Defect is an area of a pipe where a white solid substance is present on the outside surface of the pipe and wherein the bore of the pipe in that area of the pipe is narrowed by at least 0.001% relative to the bore of the pipe in an area of the pipe before or after the Defect.

As described herein, a Defect may be conveniently indicated by the presence of a white solid substance on the outer surface of the pipe, but this white substance can be rubbed off with relative ease and in that context it isn't an essential element of the Defect.

Accordingly, in one embodiment a Defect is a portion of a pipe not longer than 30cm in length where within that portion of the pipe, the bore of the pipe is narrowed by at least 0.001% relative to the bore of the pipe in an area of the pipe before or after the Defect portion of the pipe.

In one embodiment the narrowing is at least 0.005%. In one embodiment the narrowing is at least 0.01%. In one embodiment the narrowing is at least 0.05%. In one embodiment the Defect is in a portion of a pipe not longer than 25cm. In further embodiments it is not longer than 20cm. It is to be understood that the bore of the pipe refers to the inside diameter of the pipe. .

Accordingly, in one embodiment there is provided a pipe having a length of at least 1 metre, formed from a conditioned polymer composition, itself formed by a polymer conditioning process for a polymer composition, where said polymer composition comprises one or more polymeric materials each comprising: polyetheretherketone, polyetherketone, polyetherketoneetherketoneketone or polyetherdiphenyletherketone

and wherein the polymer composition contains organic manufacturing impurities;

wherein the conditioning process comprises contacting said polymer composition with a flowing hot gas for a conditioning period, according to the conditions described in (a) or (b) below in order to reduce the organic manufacturing impurities in the polymer composition:

(a) wherein the temperature T (°C) of the hot gas is a temperature selected in the range from 130°C to 230°C, and wherein the conditioning period comprises one or more periods of time totalling at least t hours, wherein t is related to T according to the formula:

$$t = Xexp(-0.048T)$$

wherein X is 58000; and where in any case, t is at least 1.5 hours;

(b) or wherein two or more temperatures T (°C) are selected as the temperatures of the hot gas to be used at different times during the conditioning process, wherein each value of T is selected in the range from 130°C to 230°C, and wherein the conditioning period comprises one or more periods of time at each of the two or more selected temperatures, wherein said one or more periods of time at each of the two or more selected temperatures are each selected so as to achieve at least the same reduction in organic manufacturing impurities as can be achieved by the single-temperature conditioning process described in (a) above.

In one embodiment the polymer pipe is an extruded polymer pipe. In one embodiment the polymer pipe is extruded from the conditioned polymer as described herein. In further embodiments the polymer pipe has a length of at least 300m. In further embodiments the polymer pipe has a length of at least 500m. In further embodiments the polymer pipe has a length of at least 800m. In further embodiments the polymer pipe has a length of at least 1000m. In further embodiments the polymer pipe has a length of at least 1.5km. In further embodiments the pipe has a wall thickness between 0.6mm and 6mm.

The invention provides a process for making a pipe (for example a pipe as described herein), the process comprising:

(i) using a calibrator device which includes an elongate opening for receiving a hot extruded pipe, wherein the elongate opening includes a vacuum applying region arranged to apply a vacuum to the outer surface of the pipe within the elongate opening, said device further comprises two or more temperature-controlled regions spaced apart along the length of the calibrator, said temperature controlled regions being arranged to apply a cooling effect to the pipe as it passes through the elongate opening, said calibrator device being in contact with one or more heat transfer fluids so as to assist said cooling effect on the pipe in each of the two or more temperature-controlled regions;

(ii) introducing hot extruded pipe into the elongate opening of the calibrator and conveying the pipe through the elongate opening; while

(iii) applying a vacuum to the outer surface of the pipe as it passes through the calibrator; wherein

(iv) the temperature of the heat-transfer fluid used for the first temperature-controlled region to come into contact with the hot extruded pipe is 60°C or lower;

(v) the temperature of the surface of the calibrator surrounding the pipe in the subsequent temperature-controlled region(s) is/are in the range of 80°C to 150°C; and wherein

(vi) the pipe has a composition comprising one or more polymeric materials each comprising: polyetheretherketone, polyetherketone, polyetherketoneetherketoneketone or polyetherdiphenyletherketone

(vii) the hot extruded pipe is extruded from a polymer composition that has been subject to the conditioning process of the first aspect.

In addition to the two or more temperature-controlled regions whose heat-transfer fluid is temperature-controlled as described herein, the calibrator may also comprise further region(s) which may be temperature-controlled or might be left to equilibrate at whatever temperature naturally results from the hot pipe passing by. For example, the additional region(s) could be situated after the "subsequent temperature-controlled region(s)" mentioned in step (v) of the process described above, or might be positioned in between the "first temperature controlled-region" and the "subsequent temperature-controlled region(s)" as mentioned in steps (iv) and (v) in the process described above. If such additional region(s) are themselves temperature-controlled to some degree, they will typically be at temperatures lower than used in the "subsequent temperature-controlled region(s)" mentioned in step (v) of the above-mentioned process.

A suitable heat transfer fluid is conveniently a thermally-stable non-viscous liquid around the temperatures it experiences during use in the process. For example, the heat transfer agent may be water provided that the operating temperatures are less than 100°C. Alternatively an oil may be used as a heat transfer agent. Preferably a suitable heat transfer agent flows against one or more hot surfaces of the calibrator and then away from the calibrator in order to efficiently and continuously transfer heat away from a hot pipe as it is being conveyed through the elongate opening of the calibrator.

In this specification, it is to be understood that "subsequent" in the term "subsequent temperature-controlled region(s)" makes reference to the fact that a pipe being extruded and passing through the calibrator will first make contact with the first temperature-controlled region, and then the "subsequent temperature-controlled region(s)" are positioned suitably close and in suitable alignment so that any portion of the pipe being conveyed through the first temperature controlled region will very soon experience and be present within the "subsequent temperature-controlled region(s)".

In one embodiment as the hot extruded pipe travels through the calibrator, any given segment of the pipe is present within the first temperature-controlled region of the calibrator for a time period in the range from 0.25 to 6 seconds. In one embodiment this range is 0.3 to 5 seconds. In one embodiment this range is 0.3 to 4 seconds.

In one embodiment as the hot extruded pipe travels through the calibrator, any given segment of the pipe is present within the subsequent temperature-controlled region(s) for at least 2 seconds. In another embodiment this period is at least 3 seconds. In another embodiment this period is at least 4 seconds. In one embodiment this period is at least 5 seconds. In one embodiment this period is at least 6 seconds.

In the process described herein, a vacuum refers to the use of a reduced pressure that may be achieved using a normal vacuum pump. The vacuum for use in the process of the present invention may be in the range of 70 mbar to 300 mbar, for example 100 mbar to 200 mbar.

In one embodiment the temperature of the surface of the calibrator surrounding the pipe in the subsequent temperature-controlled region(s) is/are in the range of 127°C to 150°C.

A thin insulating plate may be beneficially installed in between portions of the calibrator device held at different temperatures, to reduce heat exchange between the two zones and thereby achieve greater control over the temperature profile experienced by the newly extruded hot pipe during its transition through the calibrator.

In one embodiment the elongate opening of the calibrator has a circular profile.

In one embodiment the elongate opening of the calibrator has a width between 0.5cm to 35cm. In one embodiment the elongate opening of the calibrator has a circular profile wherein the diameter of the circle is between 0.5cm and 35cm.

In one embodiment the elongate opening of the calibrator has a width between 0.6cm and 31cm.

In one embodiment the elongate opening of the calibrator has a circular profile wherein the diameter of the circle is between 0.6cm and 31cm.

Therefore, in one aspect there is provided a pipe having a length of at least 1 metre, formed by a process comprising:

(i) using a calibrator device which includes an elongate opening for receiving a hot extruded pipe, wherein the elongate opening includes a vacuum applying region arranged to apply a vacuum to the outer surface of the pipe within the elongate opening, said device further comprises two or more temperature-controlled regions spaced apart along the length of the calibrator, said temperature controlled regions being arranged to apply a cooling effect to the pipe as it passes through the elongate opening, said calibrator device being in contact with one or more heat transfer fluids so as to assist said cooling effect on the pipe in each of the two or more temperature-controlled regions;

(ii) introducing a hot extruded pipe into the elongate opening of the calibrator and conveying the pipe through the elongate opening; while

(iii) applying a vacuum to the outer surface of the pipe as it passes through the calibrator; wherein

(iv) the temperature of the heat-transfer fluid used for the first temperature-controlled region to come into contact with the hot extruded pipe is 60°C or lower;

(v) the temperature of heat-transfer fluid used for the subsequent temperature-controlled region(s) is/are in the range of 80°C to 150°C; and wherein

(vi) the pipe has a composition comprising one or more polymeric materials each comprising: polyetheretherketone, polyetherketone, polyetherketoneetherketoneketone or polyetherdiphenyletherketone

(vii) the hot extruded pipe is extruded from a polymer composition that has been previously subject to the conditioning process of the first aspect.

Conveniently the calibrator device is made of a metal, for example stainless steel or brass. An example of a suitable calibrator design is shown in the figures and description of WO2012/107753. The temperature of the hot extruded polymer used in the process described herein may vary according to the specific polymer being used and the skilled person will appreciate that a suitable temperature is, for example, a little above (e.g. 20°C to 50°C above) the melting temperature of the polymer. For example, when extruding polyetheretherketone polymer (PEEK) a temperature in the range from 370°C to 410°C may be suitable.

In one embodiment the temperature of the first temperature-controlled region to come into contact with the hot extruded pipe is in the range from 0°C to 60°C. In another embodiment this range is from 5°C to 60°C. In another embodiment this range is from 8°C to 57°C. In another embodiment this range is from 5°C to 57°C.

The polymeric material comprises polyetheretherketone, polyetherketone, polyetherketoneetherketoneketone or polyetherdiphenyletherketone In one embodiment the polymeric material is selected from polyetheretherketone, polyetherketone, polyetherketoneetherketoneketone and polyetherdiphenyletherketone.

In one embodiment the polymeric material comprises polyetherketone or polyetheretherketone.

In one embodiment the polymeric material is polyetherketone or polyetheretherketone.

In one embodiment the polymeric material comprises polyetheretherketone.

In one embodiment the polymeric material is polyetheretherketone.

In one embodiment the pipe comprises a composition which includes said polymeric material and one or more fillers.

In one embodiment the pipe may consist essentially of a composition which consists essentially of said polymeric material and one or more fillers.

In one embodiment the polymeric material makes up at least 60wt% of the total thermoplastic polymeric material in the composition from which the pipe is made. In another embodiment the above-mentioned figure is at least 70wt%. In another embodiment the above-mentioned figure is at least 80wt%. In another embodiment the above-mentioned figure is at least 90wt%. In another embodiment the above-mentioned figure is at least 95wt%.

A single polymeric material (as described herein) is preferably substantially the only thermoplastic polymer in said composition. Suitably, a reference to a thermoplastic polymer refers to a polymer which is melted in the formation of said pipe.

A filler is suitably a material which is not melted during the manufacture of said pipe. Said filler suitably has a melting temperature greater than 350°C and preferably greater than 400°C.

Said filler may include a fibrous filler or a non-fibrous filler. Said filler may include both a fibrous filler and a non-fibrous filler. A said fibrous filler may be continuous or discontinuous. A said fibrous filler may be selected from inorganic fibrous materials, non-melting and high-melting organic fibrous materials, such as aramid fibres, and carbon fibre. A said fibrous filler may be selected from glass fibre, carbon fibre, asbestos fibre, silica fibre, alumina fibre, zirconia fibre, boron nitride fibre, silicon nitride fibre, boron fibre, fluorocarbon resin fibre and potassium titanate fibre. Preferred fibrous fillers are glass fibre and carbon fibre. A fibrous filler may comprise nanofibres.

However, such a filler (particularly a fibrous filler) could detrimentally increase the roughness on the inside of the pipe and therefore reduce fluid flow through the pipe in use.

A said non-fibrous filler may be selected from mica, silica, talc, alumina, kaolin, calcium sulfate, calcium carbonate, titanium oxide, ferrite, clay, glass powder, zinc oxide, nickel carbonate, iron oxide, quartz powder, magnesium carbonate, fluorocarbon resin, graphite, polybenzimidazole (PBI), carbon powder, nanotubes and barium sulfate. The non-fibrous fillers may be introduced in the form of powder or flaky particles.

Preferably, said filler comprises one or more fillers selected from glass fibre, carbon fibre, carbon black and a fluorocarbon resin. More preferably, said filler comprises glass fibre or carbon, especially discontinuous, for example chopped, glass fibre or carbon fibre.

In one embodiment the composition includes 35-100wt% of said polymeric material.

In one embodiment the composition includes 50-100wt% of said polymeric material.

In one embodiment the composition includes 65-100wt% of said polymeric material.

In one embodiment the composition includes at least 90wt% of said polymeric material.

In one embodiment the composition includes at least 95wt% of said polymeric material.

In one embodiment the composition includes at least 98wt% of said polymeric material.

In one embodiment the composition does not include a reinforcing filler (e.g. carbon fibre) but may include a non-reinforcing filler (e.g. talc or carbon black). Such a non-reinforcing filler may be included to reduce costs and/or to colour the pipe.

In one embodiment the total amount of filler in the composition is 65wt% or less.

In one embodiment the total amount of filler in the composition is 50wt% or less.

In one embodiment the total amount of filler in the composition is 35wt% or less.

In one embodiment the total amount of filler in the composition is 10wt% or less.

In one embodiment the total amount of filler in the composition is 7.5wt% or less.

In one embodiment the total amount of filler in the composition is 5wt% or less.

In one embodiment the total amount of filler in the composition is 5wt% or less and includes carbon black.

In one embodiment the composition includes carbon black as a filler.

In one embodiment the total amount of filler in the composition is 2.5wt% or less.

In one embodiment the total amount of filler in the composition is 1wt% or less.

In one embodiment the composition includes substantially no filler.

In one embodiment the composition includes at least 95%wt of said polymeric material and at least 0.1wt% of a non-fibrous filler that is carbon black.

In one embodiment the composition includes at least 98%wt of said polymeric material and at least 0.1wt% of a non-fibrous filler that is carbon black.

In one embodiment the pipe consists essentially of a polymeric material where at least 98% of its repeat units are of the formula **(XX).**

In one embodiment the pipe has a composition that consists essentially of a polymeric material where at least 98% of its repeat units are of the formula **(XX)** together with one or more fillers where the total amount of filler in the composition is 5wt% or less.

The incorporation of carbon black into the composition provides a pipe that works particularly well in any subsequent process where other materials are laser-welded onto the outside surface of the pipe. Accordingly, in one embodiment the pipe has a composition where between 0.05wt% and 5wt% of the composition is a filler that is carbon black. In one embodiment this range is 0.05wt% to 2.5wt%. In another embodiment this range is 0.05wt% to 1.5wt%. In one embodiment this range is 0.05wt% to 1wt%.

In one embodiment the pipe consists essentially of a polymeric material which is polyetheretherketone together with one or more fillers where the total amount of filler in the composition is 5wt% or less.

In one embodiment the pipe has a composition consisting essentially of a polymeric material which is polyetheretherketone together with carbon black where the carbon black is between 0.05wt% and 5wt% of the composition. In one embodiment this range is 0.05wt% to 2.5wt%.

In another embodiment this range is 0.05wt% to 1.5wt%. In one embodiment this range is 0.05wt% to 1wt%.

In this specification, when referring to a pipe or length of a pipe, this refers to a pipe that is extruded/extrudable in a single extrusion process, rather than the length being formed from two or more individual pipe sections that are joined together.

Accordingly, in any embodiment herein, the pipe comprises a single extrusion.

In a further embodiment the pipe comprises a single extrusion, has substantially constant cross-section along its entire length and has a length of at least 100m.

In one embodiment the pipe has a length of at least 5m.

In one embodiment the pipe has a length of at least 10m.

In one embodiment the pipe has a length of at least 50m.

In one embodiment the pipe has a length of at least 100m.

In one embodiment the pipe has a length of at least 500m.

In one embodiment the pipe has a length of at least 1km.

In one embodiment the pipe has a length of at least 1.5km.

In one embodiment the pipe has a length of at least 2km.

In one embodiment the pipe has a length of at least 2.5km.

In one embodiment the pipe has a length of at least 3km.

In one embodiment the pipe has a length of at least 3.5km.

In one embodiment the pipe has a substantially constant cross-section along its entire length. In one embodiment the pipe has an annular cross-section, for example a circular cross-section.

In some embodiments the elongate opening of the calibrator device has an annual cross-section, for example a circular cross-section.

The pipe produced according to this invention may be used as one continuous length or may be cut into shorter lengths (for example 0.5m, 1m, 5m) for technology applications that require such shorter lengths.

In some embodiments the pipe has an outside diameter of at least 0.6cm.

In some embodiments the pipe has an outside diameter of at least 2.5cm.

In some embodiments the pipe has an outside diameter of at least 7cm.

In some embodiments the pipe has an outside diameter of at least 10cm.

In some embodiments the pipe has an outside diameter of at least 15cm.

In some embodiments the pipe has an outside diameter of less than 50cm.

In some embodiments the pipe has an outside diameter of less than 40cm.

In some embodiments the pipe has an outside diameter of less than 30cm.

In some embodiments the pipe has an outside diameter in the range from 0.5cm to 35cm.

In some embodiment the pipe has an outside diameter in the range from 0.6cm to 31cm.

The outside diameter of a pipe may be defined as "d" cm and the thickness of the pipe wall may be defined as "t" cm. Accordingly the diameter to thickness ratio (d/t) can be defined for a pipe.

In some embodiments the diameter to thickness ratio of the pipe is at least 6.

In some embodiments the diameter to thickness ratio of the pipe is in the range from 6 to 40.

In some embodiments the diameter to thickness ratio of the pipe is in the range from 15 to 40.

In one aspect, the pipe (as described herein) is part of an assembly which comprises said pipe as an inner part and is surrounded by an outer part, said outer part being arranged around substantially all of the outer wall of the pipe and being arranged to reinforce the pipe. In a further embodiment of this assembly, the outer part of the assembly comprises a first material and a second material, the first material comprising a thermoplastic or thermosetting polymer and said second material comprising a fibrous material. In one embodiment the first material comprises a thermoplastic polymer. In one embodiment this thermoplastic polymer comprises a PAEK polymer. In one embodiment it comprises polyetheretherketone polymer. In some embodiments the second material comprises a fibrous material wherein the fibrous material is carbon fibre. In some embodiments of this aspect the outer part comprises greater than ten layers which are overlaying each other.

## Description of Figures

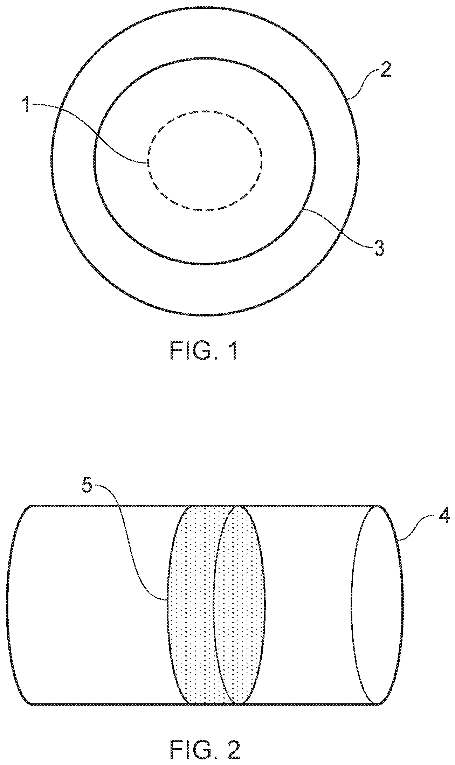

**Figure 1** is a diagram looking axially into the inside of a pipe. In between the far end of the pipe (1) and the near end of the pipe (2) a Defect is indicated circumferentially around the inside of the pipe, typically appearing as a break in an otherwise smooth & reflective pipe wall.

**Figure 2** is a diagram looking sideways onto a pipe (4) and showing where a zone (5) of white solid material may be present on the outside surface of the pipe, giving a visual indication that a defect is present.

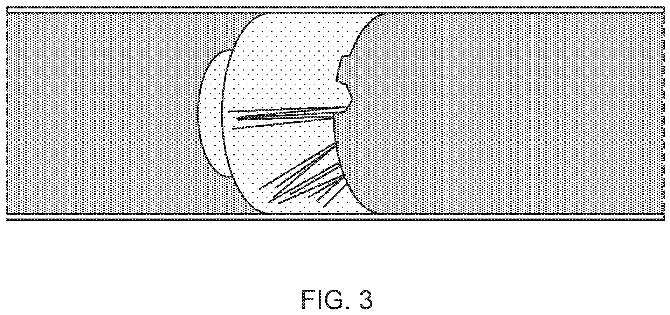

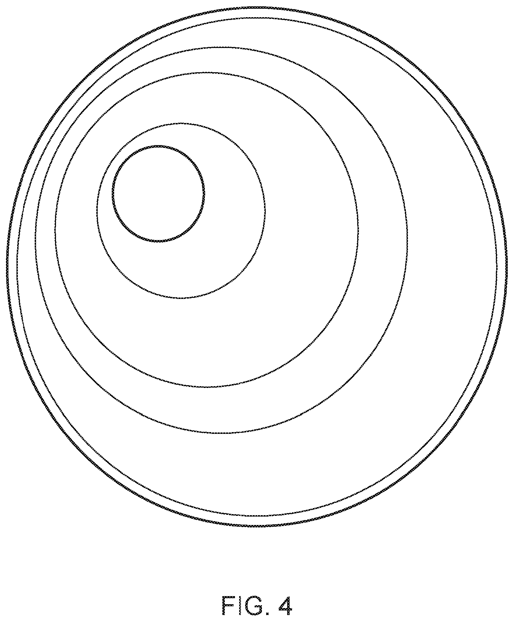

**Figure 3** and **Figure 4** are photographs of the same Defect - showing its appearance on the outside and inside of the pipe respectively. It can be seen that the white solid on the outside of the pipe may be rubbed off, but its presence is a sign that a defect is present. As shown in Figure 4, the defect appears as a circumferential anomaly part way along a pipe where the inside surface of is otherwise smooth and reflective before and after the Defect.

Further details about the typical appearance of a Defect are provided hereinbefore on page 3 of this specification.

## Experimental Details

### General Experimental Details

All pipe extrusions described herein were carried out using a calibrator device as described previously in this application and also in WO2012/107753. The temperatures used in the calibrator device are within the ranges disclosed herein, i.e. 60°C or lower in the first region of the calibrator, and a temperature in the range between 80°C to 150°C in the subsequent region(s) of the calibrator. Defect monitoring was carried out using in-line equipment that measures outside diameter and wall thickness of the pipe as it passes past the equipment on the production line. The in-line defect monitoring is supplemented by visual inspection.

### Example 1 and Comparative Example:

A pipe extrusion process was carried out using PEEK granules all derived from the same manufacturer's batch. The batch was split into two portions. The first portion was simply dried according to a normal drying protocol for the polymer (2 days at 130°C). The second portion was conditioned at a higher temperature for a longer period (140°C for 6 days). A pipe extrusion process was then started, first using the first (dried) portion of PEEK feedstock. The extruded pipe showed a Defect after 880m in this case.* The extrusion was seamlessly continued using the second (conditioned) portion of PEEK feedstock and the resulting pipe (total length 4120m) showed no further Defects.

*Defects of this type can sometimes be seen after around 300m of pipe extrusion based on the general experience of the inventors, and sporadically thereafter.

Further Examples

| Example No. | Pipe Length | Defects in Pipe | Feedstock Polymer Conditioning | |
|---|---|---|---|---|
| | | | Time | Temperature |
| 2 | 2.5km | None | 6 days | 140°C |
| 3 | 2.5km | None | 6 days | 140°C |
| 4 | 1.278km | None | 4 days at 140°C followed by 12 hours at 160°C | |

Investigation of organic manufacturing impurities

Analysis was carried out using TD-GC-MS (Thermal Desorption-Gas Chromatography-Mass Spectrometry) to study what organic manufacturing impurities were present in the polymer feedstock and what materials were being deposited on the walls and air filter of the conditioning apparatus. At least 15 different organic substances have been found to be present other than the polymer substance itself. Studies are ongoing to understand the conditioning process and its effect on the polymer material in greater detail.

**Claims**

1.  A process for making a pipe, the process comprising:

(i) using a calibrator device which includes an elongate opening for receiving a hot extruded pipe, wherein the elongate opening includes a vacuum applying region arranged to apply a vacuum to the outer surface of the pipe within the elongate opening, said device further comprises two or more temperature-controlled regions spaced apart along the length of the calibrator, said temperature controlled regions being arranged to apply a cooling effect to the pipe as it passes through the elongate opening, said calibrator device being in contact with one or more heat transfer fluids so as to assist said cooling effect on the pipe in each of the two or more temperature-controlled regions;
(ii) introducing hot extruded pipe into the elongate opening of the calibrator and conveying the pipe through the elongate opening; while
(iii) applying a vacuum to the outer surface of the pipe as it passes through the calibrator; wherein
(iv) the temperature of the heat-transfer fluid used for the first temperature-controlled region to come into contact with the hot extruded pipe is 60°C or lower;
(v) the temperature of the surface of the calibrator surrounding the pipe in the subsequent temperature-controlled region(s) is/are in the range of 80°C to 150°C; and
wherein the pipe has a composition comprising one or more polymeric materials each comprising polyetheretherketone, polyetherketone, polyetherketoneetherketoneketone or polyetherdiphenyletherketone; and
wherein the hot extruded pipe is extruded from a conditioned polymer composition formed by a conditioning process for a polymer composition, wherein said polymer composition comprises one or more polymeric materials each comprising polyetheretherketone, polyetherketone, polyetherketoneetherketoneketone or polyetherdiphenyletherketone;
and wherein the polymer composition contains organic manufacturing impurities;
wherein the conditioning process comprises contacting said polymer composition with a flowing hot gas for a conditioning period, according to the conditions described in (a) or (b) below in order to reduce the organic manufacturing impurities in the polymer composition:

(a) wherein the temperature T in °C of the hot gas is a temperature selected in the range from 130°C to 230°C, and wherein the conditioning period comprises one or more periods of time totalling at least t hours, wherein t is related to T according to the formula:

$$t = X exp(-0.048T)$$

wherein X is 58000; and where in any case, t is at least 1.5 hours;

(b) or wherein two or more temperatures T (°C) are selected as the temperatures of the hot gas to be used at different times during the conditioning process, wherein each value of T is selected in the range from 130°C to 230°C, and wherein the conditioning period comprises one or more periods of time at each of the two or more selected temperatures, wherein said one or more periods of time at each of the two or more selected temperatures are each selected so as to achieve at least the same reduction in organic manufacturing impurities as can be achieved by the single-temperature conditioning process described in (a) above. .

**Patentansprüche**

1. Prozess zum Herstellen eines Rohrs, der Prozess umfassend:

(i) Verwenden einer Kalibriervorrichtung, die eine längliche Öffnung zum Aufnehmen eines heißextrudierten Rohrs einschließt, wobei die längliche Öffnung einen Vakuumanlegebereich einschließt, der so angeordnet ist, dass er an die Außenoberfläche des Rohrs innerhalb der länglichen Öffnung ein Vakuum anlegt, wobei die Vorrichtung ferner zwei oder mehr temperaturgeregelte Bereiche umfasst, die entlang der Länge des Kalibrators voneinander beabstandet sind, wobei die temperaturgeregelten Bereiche so angeordnet sind, dass sie einen Kühleffekt auf das Rohr ausüben, wenn es durch die längliche Öffnung hindurchgeht, und wobei die Kalibriervorrichtung mit einem oder mehreren Wärmeübertragungsfluiden in Kontakt steht, um den Kühleffekt auf das Rohr in jedem der zwei oder mehr temperaturgeregelten Bereiche zu unterstützen;

(ii) Einführen eines heißextrudierten Rohrs in die längliche Öffnung des Kalibrators und Befördern des Rohrs durch die längliche Öffnung; und gleichzeitig

(iii) Anlegen eines Vakuums an die Außenoberfläche des Rohrs, während es durch den Kalibrator hindurchgeht; wobei

(iv) die Temperatur des Wärmeübertragungsfluids, das für den ersten temperaturgeregelten Bereich verwendet wird, der mit dem heißextrudierten Rohr in Kontakt kommen soll, 60 °C oder weniger beträgt;

(v) die Temperatur der Oberfläche des Kalibrators, der das Rohr in dem/den nachfolgenden temperaturgeregelten Bereich(en) umgibt, im Bereich von 80 °C bis 150 °C liegt; und

wobei das Rohr eine Zusammensetzung aufweist, die ein oder mehrere polymere Materialien umfasst, die jeweils Polyetheretherketon, Polyetherketon, Polyetherketon-etherketonketon oder Polyetherdiphenyletherketon umfassen; und

wobei das heißextrudierte Rohr aus einer konditionierten Polymerzusammensetzung extrudiert wird, die durch einen

Konditionierungsprozess für eine Polymerzusammensetzung gebildet wird, wobei die Polymerzusammensetzung ein oder mehrere polymere Materialien umfasst, die jeweils Polyetheretherketon, Polyetherketon, Polyetherketon-etherketonketon oder Polyetherdiphenyletherketon umfassen;

und wobei die Polymerzusammensetzung organische Herstellungsverunreinigungen enthält;

wobei der Konditionierungsprozess das In-Kontakt-Bringen der Polymerzusammensetzung mit einem strömenden heißen Gas für eine Konditionierungsperiode umfasst, gemäß den nachstehend unter (a) oder (b) beschriebenen Bedingungen, um die organischen Herstellungsverunreinigungen in der Polymerzusammensetzung zu reduzieren:

(a) wobei die Temperatur T in °C des heißen Gases eine Temperatur ist, die aus dem Bereich von 130 °C bis 230 °C ausgewählt ist, und wobei die Konditionierungsperiode eine oder mehrere Zeitperioden umfasst, die insgesamt mindestens t Stunden betragen, wobei sich t auf T bezieht gemäß der Formel:

$$t = Xexp(-0{,}048\,T)$$

wobei X 58000 ist; und wobei in jedem Fall t mindestens 1,5 Stunden beträgt;

(b) oder wobei zwei oder mehr Temperaturen T (°C) als die Temperaturen des heißen Gases ausgewählt werden, das zu verschiedenen Zeiten während des Konditionierungsprozesses verwendet werden soll, wobei jeder Wert von T aus dem Bereich von 130 °C bis 230 °C ausgewählt ist, und wobei die Konditionierungsperiode eine oder mehrere Zeitperioden bei jeder der zwei oder mehr ausgewählten Temperaturen umfasst, wobei die eine oder mehreren Zeitperioden bei jeder der zwei oder mehr ausgewählten Temperaturen jeweils so ausgewählt werden, dass mindestens die gleiche Reduktion organischer Herstellungsverunreinigungen erreicht wird, wie sie durch den vorstehend unter (a) beschriebenen Einzeltemperatur-Konditionierungsprozess erreicht werden kann.

**Revendications**

1. Procédé de fabrication d'un tuyau, le procédé comprenant :

(i) l'utilisation d'un dispositif de calibrage qui comporte une ouverture allongée pour recevoir un tuyau extrudé à chaud, dans lequel l'ouverture allongée comporte une zone d'application de vide agencée pour appliquer un vide à la surface extérieure du tuyau à l'intérieur de l'ouverture allongée, ledit dispositif comprend en outre deux zones à température contrôlée ou plus espacées sur la longueur du calibreur, lesdites zones à température contrôlée étant agencées pour appliquer un effet de refroidissement au tuyau lorsqu'il passe à travers l'ouverture allongée, ledit calibreur étant en contact avec un ou plusieurs fluides de transfert de chaleur de manière à contribuer audit effet de refroidissement sur le tuyau dans chacune des deux zones à température contrôlée ou plus ;
(ii) l'introduction d'un tuyau extrudé à chaud dans l'ouverture allongée du calibreur et le transport du tuyau à travers l'ouverture allongée ; pendant
(iii) l'application d'un vide sur la surface extérieure du tuyau lors de son passage à travers le calibreur ; dans lequel
(iv) la température du fluide de transfert de chaleur utilisé pour la première zone à température contrôlée et devant venir en contact avec le tuyau extrudé à chaud est inférieure ou égale à 60 °C ;
(v) la température de la surface du calibreur entourant le tuyau dans la/les zone(s) à température contrôlée suivantes est dans la plage allant de 80 °C à 150 °C ; et

dans lequel le tuyau a une composition comprenant un ou plusieurs matériaux polymères comprenant chacun polyétheréthercétone, polyéthercétone, polyéthercétoneéthercétonecétone ou polyétherdiphényléthercétone ; et
dans lequel le tuyau extrudé à chaud est extrudé à partir d'une composition polymère conditionnée formée par un procédé de conditionnement pour une composition polymère, dans lequel ladite composition polymère comprend un ou plusieurs matériaux polymères comprenant chacun polyétheréthercétone, polyéthercétone, polyéthercétoneéthercétonecétone ou polyétherdiphényléthercétone ;
et dans lequel la composition polymère contient des impuretés organiques de fabrication ;
dans lequel le procédé de conditionnement comprend la mise en contact de ladite composition de polymère avec un gaz chaud en circulation pendant une période de conditionnement, selon les conditions décrites en (a) ou (b) ci-dessous afin de réduire les impuretés organiques de fabrication dans la composition polymère :

(a) dans lequel la température T en °C du gaz chaud est une température choisie dans la plage allant de 130 °C à 230 °C, et dans lequel la période de conditionnement comprend une ou plusieurs durées totalisant au moins t heures, dans lequel t est apparenté à T selon la formule :

$$t = X exp(-0{,}048\ T)$$

où X est égal à 58 000 ; et où dans un quelconque cas, t est au moins 1,5 heure ;
(b) ou dans lequel deux températures T (°C) ou plus sont choisies en guise de températures du gaz chaud à utiliser à différents moments pendant le procédé de conditionnement, dans lequel chaque valeur de T est choisie dans la plage allant de 130 °C à 230 °C, et dans lequel la période de conditionnement comprend une ou plusieurs durées à chacune des deux températures choisies ou plus, dans lequel lesdites une ou plusieurs durées à chacune des deux températures choisies ou plus sont choisies de manière à obtenir au moins la même réduction des impuretés organiques de fabrication que celle pouvant être obtenue par le procédé de conditionnement à température unique décrit en (a) ci-dessus.

FIG. 1

FIG. 2

FIG. 3

FIG. 4

**REFERENCES CITED IN THE DESCRIPTION**

**Patent documents cited in the description**

- JP H0788033 B
- CN 104441536
- CN 108859064
- CN 106273303 A
- WO 2012047613 A1
- CN 106674541 B
- WO 2010088639 A1
- WO 2012107753 A1
- WO 02096974 A2
- WO 2012107753 A